# EUROPÄISCHE PATENTSCHRIFT

(11) **EP 0 352 515 B1**
(45) Veröffentlichungstag und Bekanntmachung des Hinweises auf die Patenterteilung: **03.02.1993**
(21) Anmeldenummer: 89112309.3
(22) Anmeldetag: 06.07.1989
(51) Int. Cl.: B62B 1/12

(54) **Zusammenlegbare, zweirädrige Stechkarre**
Collapsible two-wheeled trolley
Diable pliant à deux roues

(30) Priorität: 26.07.1988 DE 8809506 U
(43) Veröffentlichungstag der Anmeldung: 31.01.1990
(73) Patentinhaber: Bielefelder Küchenmaschinen- und Transportgeräte-Fabrik vom Braucke GmbH, D-33739 Bielefeld (DE)
(72) Erfinder: vom Braucke, Manfred, Dipl.-Ing., D-4800 Bielefeld 15 (DE); vom Braucke, Hans, D-4973 Vlotho (DE)
(74) Vertreter: Meldau, Gustav, Dipl.-Ing.

(56) Entgegenhaltungen:
- US-A- 3 043 603
- US-A- 3 241 852
- US-A- 4 185 853
- US-A- 4 448 434

## Beschreibung

Die Erfindung betrifft eine zusammenlegbare, zweirädrige Stechkarre mit einem aus einem Paar Längsprofile gebildeten Vertikalrahmen, dessen unteres Ende ein als Schüppe ausgebildetes Lastaufnahmemittel und zwei mit je einem Rad versehene Radträger aufweist und dessen oberes Ende als Schiebebügel mit einem Quersteg als Griff ausgebildet ist, wobei die Längsprofile des Vertikalrahmens zwischen den Radträgern mit dem Quersteg und jeweils im Abstand davon durch mindestens einen Querriegel miteinander verbunden sind, wobei jeder Radträger um eine in der Ebene des Vertikalrahmens verlaufende Schwenkachse schwenkbar an das untere Ende des ihm zugeordneten Längsprofils angelenkt ist, wobei die Schüppe um eine rechtwinklig zu den Schwenkachsen der Radträger verlaufende weitere Schwenkachse an die unteren Enden der Längsprofile angelenkt ist und wobei Sperrmittel vorgesehen sind, mit denen bei ausgeschwenkter Schüppe die ausgeschwenkten Radträger festlegbar sind.

In vielen Fällen ergibt sich das Bedürfnis, kleinere Lasten sicher und einfach zu transportieren, wobei das Transportmittel für die Lasten mitnehmbar sein soll. Derartige Gelegenheiten sind beispielsweise der Abtransport von Einkaufsgut aus einem Pkw zum Haus. Aber auch für Freizeitbeschäftigungen gibt es derartige Anwendungsfälle: Wird z. B. bei der Vorbereitung eines Segelturns das Boot aufgerüstet, müssen viele Ausrüstungsgegenstände zum Boot gebracht werden, wobei im allgemeinen die Anleger nicht mit dem Pkw erreichbar sind. In diesen Fällen eignen sich Stechkarren für den Ladungstransport. Sowohl im privaten Haushalt als auch beim Mitführen einer derartigen Stechkarre im Pkw oder an Bord eines Bootes o. dgl. ist es eine Notwendigkeit, die Stechkarre möglichst flach und platzsparend zusammenlegen zu können und die Stechkarre möglichst leicht zu bauen.

Zusammenlegbare und leicht gebaute Stechkarren sind z. B. bekannt aus der US-PS 3 043 603. Die dort vorgeschlagene Stechkarre weist einen starren Vertikalrahmen mit einem Quersteg als Griff auf. An das untere Ende des Vertikalrahmens ist eine Schüppe schwenkbar um eine quer zur Ebene des Vertikalrahmens liegenden Achse angelenkt und im Bereich des unteren Endes sind Radträger mit den zum Rollen der Stechkarre notwendigen Rädern vorgesehen, die eingeschwenkt werden können und die Sicherungsmittel aufweisen, die die ausgeschwenkten Radträger in ihrer Stellung fixieren. Die dazu vorgesehenen, in eine Ausnehmung in der Hülse eingreifenden Nasen können jedoch insbesondere bei längerem Gebrauch nicht verhindern, daß die für ein sicheres Fahren notwendige Winkelstellung der Radträger fixiert ist. Darüber hinaus ist bei dieser Art der Fixierung bei geringen auf die Räder wirkenden Stellkräften wegen der großen Hebelübersetzung mit erheblichen Kräften an der die Sperrung bewirkenden Nase zu rechnen, so daß Deformationen im Bereich der Lagerhülse die Schwenkbarkeit der Radträger erschweren. Eine andere Art der Fixierung der Radträger beschreibt das DE-GM 19 43 253; hier wird der Radträger mit einem Sperrstift fixiert. Die in dieser Druckschrift beschriebene Stechkarre weist darüber hinaus ein aufklappbares Schüppenblatt auf und sieht die Möglichkeit vor, den als Griffbügel ausgebildeten Vertikalrahmen durch Umklappen zu verkleinern. Die die Last aufnehmende Schüppe ist ebenfalls aufklappbar an den Vertikalrahmen angelenkt. Eine sehr aufwendige Konstruktion beschreibt das DE-GM 19 82 824, bei dem das Einschwenken der Räder zwangsweise mit dem Umlegen des Griffteiles des Schiebebügels kombiniert ist. Weitere Stechkarren, vorzugsweise zum Transport von Reisegepäck, beschreiben die US-PS 4 335 985 und CH-PS 217 650.

Von diesem Stand der Technik ausgehend stellt sich die der Erfindung zugrunde liegende Aufgabe, eine Weiterentwicklung einer gattungsgemäßen Stechkarre derart vorzuschlagen, daß sie in einfacher Weise von der Ruhestellung in die Gebrauchsstellung und umgekehrt gebracht werden kann, daß sie in Gebrauchsstellung einen sicheren Transport von Waren erlaubt und daß sie in Ruhestellung möglichst wenig Raum einnimmt, wobei die Stechkarre selbst als Leichtkonstruktion ausgebildet wirtschaftlich herstellbar sein soll.

Diese Aufgabenstellung wird durch das Kennzeichen des Hauptanspruchs gelöst; vorteilhafte Weiterbildungen und bevorzugte Ausführungsformen beschreiben die Unteransprüche.

Bei der vorgeschlagenen Ausbildung der Stechkarre wird die Verriegelung der ausgeschwenkten Radträger der Schüppe zugeordnet. Dadurch wird die Radträgerlagerung am unteren Ende der Vertikalprofile von der Verriegelungsaufgabe frei, der Abstand und damit der Hebelarm wird gleichzeitig vergrößert, so daß die an der Verriegelung wirksam werdenden Kräfte gegenüber einem Sperrglied am unteren Längsprofil selbst erheblich verkleinert werden. Die Unterteilung des Vertikalrahmens in einen oberen und einen unteren Rahmenteil durch Teilung der Längsprofile in der Weise, daß die oberen Längsprofile an die einander zugewandten Seiten der unteren Längsprofile angelenkt werden, erlaubt das völlige Einschlagen des oberen Rahmenteils in den unteren Rahmenteil selbst bei gleichstarken Profil-Rohren. Dabei sind die unteren Profilrohre im allgemeinen um etwa den Raddurchmesser länger, so daß der Griffbügel höchstens klemmend mit den Radbandagen in Berührung kommt. Das Gelenk selbst weist Sperrmittel aus, die es sowohl im ausgeschwenkten als auch im eingeschwenkten Zustand sicher sperren und dabei in beiden Stellungen das obere Ende des unteren Rahmenprofils und das untere Ende des oberen Rahmenprofils übergreift. Durch diese Ausbildung wird auch der eingeklappte Zustand gesichert, ein wesentliches Moment, wenn die zusammengelegte Stechkarre z. B. in Fahrzeugen transportiert werden soll.

Die Sperrmittel zum Festlegen der ausgeschwenkten Radträger können unmittelbar am Schüppenrücken angeordnet sein und mit dem Radträger selbst unmittelbar zusammenwirken. Sie können auch auf dem Schüppenblatt selbst angeordnet sein, z. B. in Form des Lagerbockes, mit dem die Schüppe an das untere Ende des Vertikalrahmens angelenkt ist. Eine dritte Möglichkeit ergibt sich durch Anformung der Sicherungsmittel an den Schüppenrücken selbst, wobei das Zusammenwirken auch mit Anformungen am Radträger möglich ist. Um einen sicheren Sitz und somit eine sichere Ausrichtung des Radträgers zu erreichen, wird eine konische oder keilförmige oder V-förmige Ausbildung der Sicherungselemente vorgeschlagen, die - weil die Schüppe in ihrem Schwenkbereich frei ist - eine "selbst nachstellende" Arretierung bewirkt. Dabei ist es im Grundsatz gleich, ob im Schüppenrücken Ausnehmungen mit keilförmigen Flanken vorgesehen sind, die mit einem oder beiden Traversblechen eines einfachen oder eines doppelten Radträgers zusammenwirken oder ob eine Anformung im Bereich des verlängerten Stützbockes mit einer Aufnahme mit V-förmigem Querschnitt und eine entsprechend geformte Nase am Radträger vorliegt oder ob die Aufnahme in der beschriebenen Form an den Schüppenrücken angeformt ist. Der so hergestellte Formschluß erzwingt die gewünschte Ausrichtung der Radträger und stabilisiert die Radträger in dieser Ausrichtung, wobei eine Vergrößerung der mit der Stechkarre transportierten Last eine progressive stabilisierende Wirkung aufweist.

Zum Ausschwenken ist es vorteilhaft, wenn die Radträger über die 90°-Stellung hinaus geschwenkt werden können, da sie dann bei liegender Stechkarre während des Entfaltens über den Punkt des indifferenten Gleichgewichts hinaus bewegt nicht wieder in ihre eingeklappte Lage zurückfallen können. Die Konus-keil- oder V-förmigen Sicherungsmittel sind in der Lage, diese Abweichung aufzunehmen und den richtigen 90°-Sitz durch das bei dieser Art des Eingriffs gegebene "Anschnäbeln" sicher herzustellen.

Um das Schüppenblatt in eingeschwenkter und in ausgeschwenkter Stellung zu sichern, ist am unteren Ende zumindest eines der unteren Längsprofile ein elastischer Stopfen mit überstehender Wulst vorgesehen, der mit dem Schüppenblatt bzw. mit dem Schüppenrücken und/oder mit dem Lagerbock der Schüppe klemmend zusammenwirkt. Dadurch wird zumindest in Ruhestellung und in Arbeitsstellung erreicht, daß eine gewisse Kraft zum Schwenken der Schüppe aufgewandt werden muß und nicht eine beliebig kleine Kraft ein Schwenken auslöst.

Vorteilhaft ist es, den Abstand der Drehachsen der Räder von der Innenseite des aufgeklappten Schüppenrückens so zu wählen, daß bei eingeschwenkten Radträgern und aufgeklappter Schüppe die Radbandagen mit dem Schüppenrücken klemmend zusammenwirken. Dadurch wird eine Sicherung von Schüppe und Rädern im eingeklappten Zustand erreicht. Da diese Klemmung bei geradem Schüppenrücken zu einer (relativ) hohen Flächenpressung führt, ist es weiter vorteilhaft, den Schüppenrücken im Bereich der Klemmung dem Raddurchmesser entsprechend wellenförmig auszuformen. Durch diese Ausformung wird bei gleicher Klemmkraft die Flächenpressung verringert und so einer Verformung auch leicht fließender Radbandagen aus Kunststoff (insbesondere bei Mitnahme der Stechkarre in aufgeheizten Fahrzeugen!) vorgebeugt.

Um auch bei der Verwendung von U-förmigen Radträgern ein flaches Zusammenlegen zu ermöglichen, das die Stärke der Radbandagen nicht wesentlich übersteigt, ist es vorteilhaft, Ausnehmungen im Schüppenblatt vorzusehen, die zumindest in Form und Größe dem Radträger angepaßt sind, so daß bei eingeschwenktem Radträger und aufgeklappten Schüppenblatt der Radträger in dieser Aussparung liegt. Darüber hinaus können die Aussparungen größer ausgebildet sein oder es können weitere Aussparungen vorgesehen sein, wobei die Aussparungen zum einen eine Verringerung des Fertigungsmaterials bedeuten und zum anderen eine Reduzierung der Masse und damit des Gewichts der Stechkarre.

Durch die Unterteilung der Längsprofile und die Anlenkung der oberen Längsprofile an die unteren wird der Vertikalrahmen zur Verringerung der Höhe klappbar. Die Anlenkung erfolgt dabei so, daß die oberen Längsprofile an die einander zugewandten Seiten der unteren Längsprofile mit einer Bolzenverbindung angelenkt sind, so daß das Einschwenken des oberen Rahmenteils in den unteren frei erfolgen kann und der Ober rahmen im Unterrahmen auch coplanar liegen kann. Das Schwenken erfolgt dabei um eine zur Schwenkachse der Schüppe parallele Schwenkachse, die in der Vertikalrahmen-Ebene liegt. Für den sicheren Umgang mit der Stechkarre ist ein Festlegen sowohl des aus- als auch des eingeschwenkten oberen Rahmenteils am unteren Rahmenteil notwendig. Dazu ist das obere Ende des unteren Längsprofils mit einer frei schwenkbaren Sperrfalle versehen, die einen U-förmigen Querschnitt zum Übergreifen sowohl des oberen Endes des unteren Längsprofils als auch des unteren Endes des oberen Längsprofils aufweist. Diese Sperrfalle sichert das durch die Anlenkung gebildete Gelenk in beiden möglichen Zuständen. Zusätzlich können die inneren Längsprofile des Rahmenoberteils mit einer Querwelle verbunden sein, deren zu den unteren Längsprofilen des unteren Rahmenteils geöffneten Enden einen elastischen Stopfen aufweisen, der gegebenenfalls in eine Abplattung oder Ausnehmung im unteren Rahmenteil eingreifend eine Klemmung zwischen dem oberen Rahmenteil und dem unteren Rahmenteil bewirkt. Eine andere Möglichkeit einer zusätzlichen Sicherung besteht darin, das freie Ende des oberen Längsprofils mit einem elastischen Stopfen zu versehen, der eine überstehende Wulst aufweist. Diese überstehende Wulst wirkt sowohl im eingeschwenkten als auch im ausgeschwenkten Zustand mit dem oberen Ende des unteren Längsprofils klemmend zusammen. Eine Festlegung der Sperrfalle bringt zusätzliche Sicherheit; diese Ausbildung ist dann gegeben, wenn die Sperrfalle oder zumindest ein davon abgeteilter Finger das obere Längsprofil geringfügig hintergreift. Ist die Sperrfalle aus einem hinreichend elastischen Material - beispielsweise ein Kunststoff - gefertigt, genügt ein Überstehen der die freie Öffnung bildenden Enden der Sperrfallen-Wände.

Nahe den unteren Enden, jedoch in einem Abstand von den Radträgern größer als der Halbmesser des Rades einschließlich Bandage wird vorteilhaft ein Quersteg angeordnet, der von der Außenseite auf die Längsprofile aufgesetzt ist und der parallel zur Schwenkachse der Schüppe verläuft. Dadurch ergibt sich eine Stabilisierung des unteren Vertikalrahmens. Wird dieser Quersteg von der der eingeklappten Schüppe gegenüber liegenden Seite auf die unteren Längsprofile aufgesetzt, ergibt sich darüber hinaus ein Zwischenraum zwischen Schüppe und Quersteg, in dem der eingeschwenkte obere Rahmenteil zu liegen kommt. Vorteilhaft dabei ist, daß beim Einschwenken des oberen Rahmenteils nach Lösen der Sperrfallen der obere Rahmenteil bis an den Anschlag an diesem Quersteg eingeschwenkt werden kann und dann genau in der Position ist, in der die Sperrfallen zur Sicherung dieser Lage wieder übergelegt werden können. Dieser Quer bietet darüber hinaus weitere Vorteile: Wird er mit Schrägschlitzen und Löchern versehen, kann an ihm ein elastischen Seil klemmend angeschlagen werden, das als Ladungssicherung eingesetzt werden kann. Wird dieses elastische Seil mehrfach zwischen dem fahrgestellseitigen Querriegel und dem drehachsenseitigen Querriegel oder zwischem dem fahrgestellseitigen Querriegel und dem Schüppenrücken (der dann auch mit entsprechenden Schrägschlitzen und Löchern versehen ist) hin und her geführt, wird eine Kleinteile-Sicherung erreicht, so daß kleine Päckchen o. dgl. am Durchfallen durch den Vertikalrahmen gehindert werden. Gegenüber Seilen mit üblichen Befestigungsklauen kann das in den Schrägschlitzen verklemmte elastische Seil beliebiger Länge optimal auf die Anforderungen zur Ladungssicherung abgestellt werden, wobei das Klemmen so erfolgt, daß das Seil durch ein Loch geführt um 180° umgelenkt und in einen benachbarten Schrägschlitz eingeklemmt wird. Darüber hinaus dient der fahrgestellseitige Querriegel vorteilhaft auch zum Festlegen eines Zuggliedes, dessen zweites Festlager am Schüppenrücken vorgesehen ist. Dieses Zugglied - eine Feder oder ein elastisches Seil - gibt dem Vertikalrahmen der abgestellten aufgeklappten Stechkarre ein Gegenmoment und beugt so einem Überkippen des Vertikalrahmens vor.

Eine besonders kleine und platzsparende Form wird erreicht durch eine Trennung von Vertikalrahmen und Fahrgestell. Es versteht sich von selbst, daß dabei Fahrgestell und Schüppe derartig ausgebildet sind, daß das abgenommene und zusammengeklappte Fahrgestell im vom eingeklappten oberen Rahmenteil des Vertikalrahmens gebildeten Aufnahmeraum Platz findet. Bei dieser Ausführungsform sind die Radträger an die umgebogenen Enden eines das Fahrgestell zusammenhaltenden Querriegels angelenkt, wobei der Querriegel beidseits Steckaufnahmen für die unteren Enden der unteren Längsprofile des Vertikalrahmens aufweist und diese unteren Enden als Steckenden ausgebildet sind. Diese Steckenden sind gegen ein unbeabsichtigtes Lösen der Steckverbindung mit hintergreifenden Sperrnasen versehen, wobei die Steckaufnahmen eine hinreichende Weite zur Aufnahme der Steckenden aufweisen. Da der gesamte Vertikalrahmen in sich hinreichende Elastizität besitzt, können die unteren Enden der unteren Längsprofile eine Spreizung aufweisen, die die Steckenden in den gesperrten Sitz in den Steckaufnahmen drückt. Der Sitz des Vertikalrahmens kann weiter verbessert werden, wenn die quer zur Vertikalrahmen-Ebene gemessene Weite der Steckaufnahmen sich in Spreizungsrichtung des Vertikalrahmens bis etwa zur Stärke des Steckendes der unteren Längsprofile verringert. In allen Fällen ist die Einführtiefe der Steckenden in die Steckaufnahme durch vorzugsweise einstellbare Anschläge begrenzt.

Das Wesen der Erfindung wird anhand der in den Figuren 1 bis 14 beschriebenen Ausführungsformen beispielhaft näher erläutert; dabei zeigen:
- Figur 1 Stechkarre mit einschwenkbarem Vertikalrahmen, Transportstellung, Frontansicht
- Figur 2 Stechkarre nach Figur 1 (entsprechend Schnitt II-II)
- Figur 3 gemäß Figur 1 bzw. 2, jedoch Schüppe, Radträger mit Räder und Vertikalrahmen eingeschwenkt; entsprechend Schnitt III-III (Figur 4)
- Figur 4 Stechkarre nach Figur 3, Frontansicht
- Figur 5 Fallensicherung des Gelenksunterrahmen/Oberrahmen (5a:Oberrahmen ausgeklappt,5b:Oberrahmen eingeklappt)
- Figur 6 Anlenkung von Radträger und Schüppe an das untere Längsprofil bzw. an das umgebogene Ende des Querriegels
- Figur 7 Anlenkung Radträger entsprechend Schnitt VII-VII (Figur 6)
- Figur 8 Anlenkung Schüppe entsprechend Schnitt VIII-VIII (Figur 6)
- Figur 9 Stechkarre in Transportstellung entsprechend Figur 3, jedoch andere Ausführungsform
- Figur 10 Einzelheit der Stechkarre nach Figur 9 entsprechend Schnitt X-X (Figur 9)
- Figur 11 Einzelheit Stechkarre nach Figur 9, Transportstellung mit Zugglied
- Figur 12 Zusammenwirken von Radträger und Schüppe mit Sicherungsmitteln - schematische Perspektive -
- Figur 13 Stechkarre mit abnehmbarem Rahmen - Transportstellung
- Figur 14 Steckaufnahmen und Steckenden der Stechkarre mit abnehmbarem Vertikalrahmen entsprechend Figur 13.

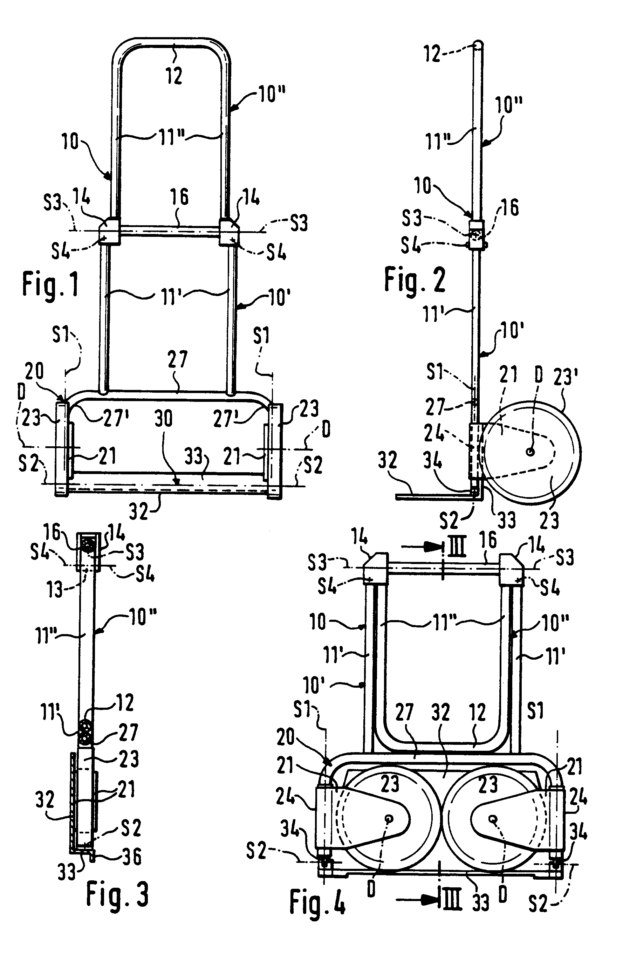

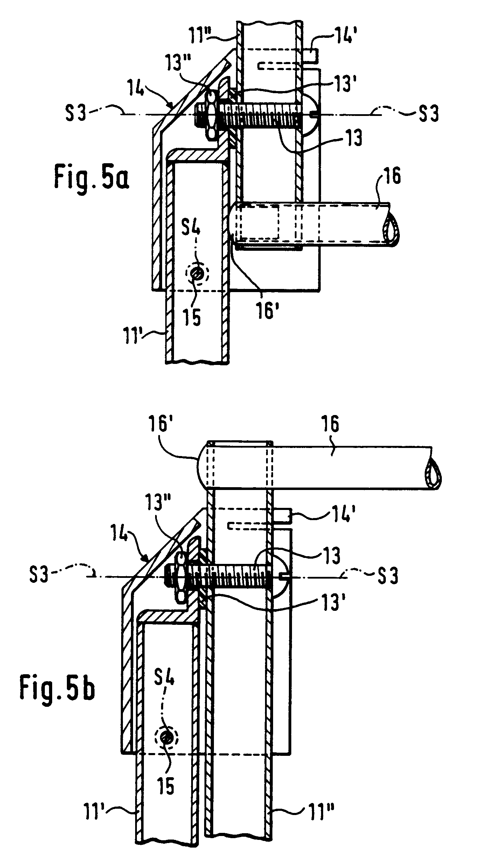

Die Figuren 1 bis 4 zeigen eine Ausführungsform der Stechkarre mit Vertikalrahmen 10, Fahrgestell 20 und Lastaufnahmemittel 30 in ausgeklappter Arbeitsstellung (Figur 1,2) und in eingeklappter Transportstellung (Figur 3,4). Der Vertikalrahmen 10 besteht aus dem Unterrahmen 10′ und dem Oberrahmen 10˝, die beide so aneinandergelenkt sind, daß die oberen Längsträger 11˝ auf den Innenseiten der unteren Längsträger 11′ sitzen und somit der Oberrahmen 10˝ in den Unterrahmen 10′ um die Schwenkachse S3 eingeschwenkt werden kann. Ein Quersteg 12 verbindet die beiden oberen Längsprofile 11˝ und bildet den Griff des Vertikalrahmens. Die Anlenkung des Oberrahmens 10˝ an den Unterrahmen 10′ ist mit den Sperrfallen 14 gesichert, die um die Schwenkachsen S4 drehbar das Gelenk im ausgeklappten und auch im eingeklappten Zustand (Figur 3, 4) festlegen. Das untere Ende des Oberrahmens 10˝ ist zweckmäßigerweise mit einem Querriegel 16 verbunden, der in der Darstellung der Figuren 1 bis 4 koachsial zur Drehachse sitzt. Am unteren Ende des Unterrahmens 10′ ist das Fahrgestell 20 vorgesehen; dazu sind die unteren Enden der unteren Längsprofile 10′ mit einem fahrgestellseitigen Querriegel 27 verbunden, dessen nach außen weisende Enden 27′ parallel zu den unteren Enden der unteren Längsprofile 11′ umgebogen sind. Diese umgebogenen Enden 27′ nehmen die Schwenkhülsen 24 für die Radträger 21 auf, wobei diese beidseits angeordneten Radträger 21 mit den zum Rollen der Karre vorgesehenen, um die Drehachse D drehbaren Räder 23 versehen sind. Die Räder 23 sind vorteilhaft mit einer das Abrollen verbessernden und Stöße auffangenden Radbandage 23′ versehen. Die Hülsen 24 der Radträger 21 sind dabei schwenkbar um die Schwenkachse S1 an die umgebogenen Enden 27′ des Querriegels 27 angelenkt, so daß sie in Betriebsstellung (Figur 1,2) ausgeschwenkt und in Ruhestellung (Figur 3,4) eingeschwenkt werden können. Im eingeschwenkten Zustand liegen sie innerhalb des im wesentlichen vom Vertikalrahmen 10 gegebenen Aufnahmeraumes, da der fahrgestellseitige Querriegel 27 mit seinen umgebogenen Enden 27′ in der Ebene des Vertikalrahmens 10 liegt. An die unteren Enden der umgebogenen Enden 27′ des fahrgestellseitigen Querriegels 27 ist eine Schüppe als Lastaufnahmemittel 30 schwenkbar um die Schwenkachse S2 angelenkt. Die Schwenkachse S2 verläuft dabei rechtwinklig zu den Schwenkachsen S1 und liegt vorteilhaft in der von den Schwenkachsen S1 vorgegebenen Ebene. Zur Anlenkung weist die Schüppe beidseits mit den umgebogenen Enden 27′ des fahrgestellseitigen Querriegels 27 über einem die Schwenkbarkeit sicherstellenden Bolzen 35 zusammenwirkenden Lagerbock 34 auf. Die Schüppe 30 besteht aus einem Schüppenblatt 32 und einem Schüppenrücken 33, wobei das Schüppenblatt 32 als Auflager für die Last dient und der Schüppenrücken 33 ein Abrutschen der Last beim Fahren der dann gekippten Stechkarre verhindert. Im eingeklappten Zustand (Figur 3,4) liegt die Schüppe im Bereich des Fahrgestells 20 eng an dem Vertikalrahmen 10 bzw. dem Fahrgestell 20 mit dem unteren Querriegel 27 und seinen nach außen weisenden umgebogenen Enden 27′ an, so daß die Dicke der zusammengelegten Stechkarre (Figur 3,4) im wesentlichen nur bestimmt ist durch die Stärke der Rohre des Vertikalrahmens, der Stärke des Schüppenblattes und ggfs. der Stärke eines überstehenden Radträgers 21 (wobei in den Figuren 1 und 2 das Rad 23 von einem Radträger 21 und in der Figur 3 das Rad 23 von einem doppelten gabelförmig ausgebildeten Radträger 21 gehalten wird). Die Figuren 5 zeigen die Sicherung des Gelenks zwischen dem Unterrahmen und dem Oberrahmen mit Hilfe der Sperrfall 14. Dabei ist lediglich eines der Gelenke dargestellt, das zweite ist entsprechend spiegelsymmetrisch dazu ausgebildet. An das untere der Längsprofile 11′ ist mit Hilfe des Bolzens 15 die Sperrfalle 14 schwenkbar um die (rechtwinklig zur Zeichnungs ebene liegende) Schwenkachse S4 angelenkt. Der obere Längsträger 11˝ ist an einen auf den unteren Längsträger 11′ aufgesetzten Winkel mit Hilfe des Bolzens 13 angelenkt, wobei der Bolzen 13 mit einer Mutter 13˝ festgezogen wird und sich zwischen dem Winkel und dem oberen Längsträger 11˝ eine vorzugsweise elastische Einlage 13′ befindet. Durch Anziehen der Mutter 13˝ kann eine gewisse Klemmung des um die Schwenkachse S3 schwenkbaren Oberträgers 11˝ - die Schwenkachse S3 liegt koachsial zur Achse des Bolzens 13 - erreicht werden. Die der Griffseite abgewandten Enden der oberen Längsprofile 11˝ sind durch einen Querriegel 16 miteinander verbunden, der in der Darstellung der Figur 5 außerhalb der Schwenkachse S3 des oberen Längsprofils 11˝ und somit des Oberrahmens 10′ (Figur 1) liegt. Das äußere Ende des Querriegels 16 ist mit einem elastischen Stopfen 16′ verschlossen, der im ausgeklappten Zustand mit dem unteren Längsprofil 11′ klemmend zusammenwirkt (Figur 5a). Im eingeklappten Zustand bildet der Querriegel 16 einen Handgriff zum vereinfachten Umgehen mit der zusammengeklappten Stechkarre. Zur Verbesserung der Sicherung ist zumindest eine der übergreifenden Seiten der Falle 14 mit einem Einschnitt versehen, der einen Klemmfinger 14′ abteilt. Dieser Klemmfinger 14′ kann dabei derart ausgebildet sein, daß er das obere Längsprofil 11˝ hintergreift. Es versteht sich von selbst, daß bei Verwendung von Kunststoff-Spritzgußprofilen die freien Kanten der Übergreifungswände über ihre gesamte Länge derartig hintergreifend ausgebildet sein können.

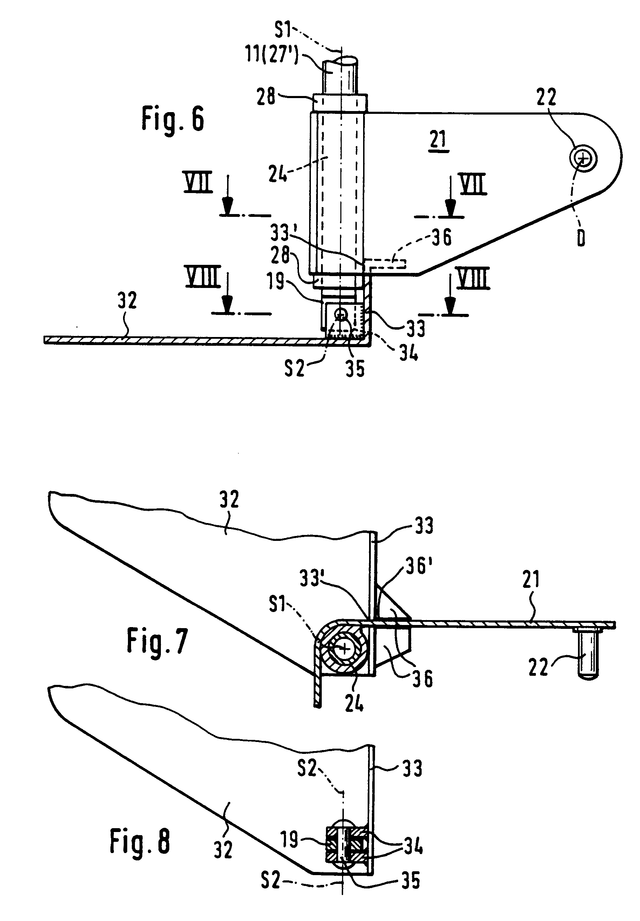

Die Figur 6 zeigt eine Einzelheit der Anlenkung der Radträger an die unteren Enden der unteren Längsprofile 11′ bzw. an die nach unten weisenden umgebogenen Enden 27′ des fahrgestellseitigen Querriegels 27. Die Radträger 21 sind mit Hülsen 24 um die Schwenkachse S1 schwenkbar auf diese Enden aufgesetzt, wobei nicht näher bezeichnete Stellringe die Lagefixierung übernehmen. Das aus der Hülse herausragende Ende 19 der unteren Längsprofile 11′ bzw. der nach unten weisenden umgebogenen Enden 27′ ist abgeflacht und greift in einen Lagerbock 34 auf dem Schüppenblatt 32 ein und ist mit einer Bohrung zur Durchführung eines Bolzens 35 versehen, der als Anlenkbolzen für die Schüppe mit Schüppenblatt 32 und Schüppenrücken 33 dient und der so ein Schwenken der Schüppe um die Schwenkachse S2 erlaubt. Um die ausgeschwenkten Radträger 21 in ihrer Position zu fixieren, wirken Schüppe und Radträger derart zusammen, daß die ausgeschwenkte Schüppe die ausgeschwenkten Radträger in der gewünschten Position sichert. Im einfachsten Fall übergreift der Schüppenrücken 33 den Radträger 21 und weist einen mindestens bis zur Unterkante des Radträgers 21 reichenden Einschnitt 33′ auf. Wird der Ausschnitt 33′ zumindest in seinem oberen Ende V-förmig gestaltet, bedarf es keiner besonderen Halterung, um das Einführen eines nicht genau in Position stehenden Radträgers beim Ausschwenken der Schüppe zu erreichen. In der Darstellung (Blick von der Mitte nach außen) ist am Schüppenrücken ein (gestrichelt dargestellter) Anschlag 36 vorgesehen, der mit der Außenseite des Radträgers 21 zusammenwirkt und ein Überklappen verhindert. Es versteht sich von selbst, daß dieser Sicherungsanschlag 36 auf beiden Seiten des Radträgers 21 vorgesehen sein kann, da das Einführen voraussetzt, daß die Radträger ausgeschwenkt sind und erst dann die Ausschwenkung der Schüppe erfolgt. Vorteilhaft ist es auch hier, wenn die Flanken 36′ keilförmig ausgebildet sind. Diese Verhältnisse sind in der Figur 7 im einzelnen dargestellt, wobei diese Figur dem Schnitt VII-VII (Figur 6) entspricht. Der hier dargestellte Radträger 21 weist einen Achsstummel 22 zur Aufnahme des Rades 23 (Figur 1) auf, das von der Außenseite her auf den Achsstummel 22 aufgesetzt und dort mit üblichen Mitteln verriegelt wird. Eine weitere Einzelheit zeigt die Figur 8 entsprechend dem Schnitt VIII-VIII (Figur 6), in der die Anlenkung der Schüppe mit Schüppenblatt 32 und Schüppenrücken 33 an eine Lasche 19 am unteren Ende der unteren Längsträger 11′ bzw. der nach unten weisenden umgebogenen Enden 27′ des fahrgestellseitigen Querriegels 27 dargestellt ist. Der sowohl am Schüppenblatt 32 als auch am Schüppenrücken 33 festgesetzte Lagerbock 34 weist eine Bohrung auf, der bei eingesetztem Schüppenblatt eine koachsiale Bohrung in der Lasche 19 entspricht. Ein durch die Laschen gesetzter Bolzen 35 bewirkt die Anlenkung, wobei die Schüppe um die koachsial zur Bolzenachse liegende Schwenkachse S2 schwenkbar ist.

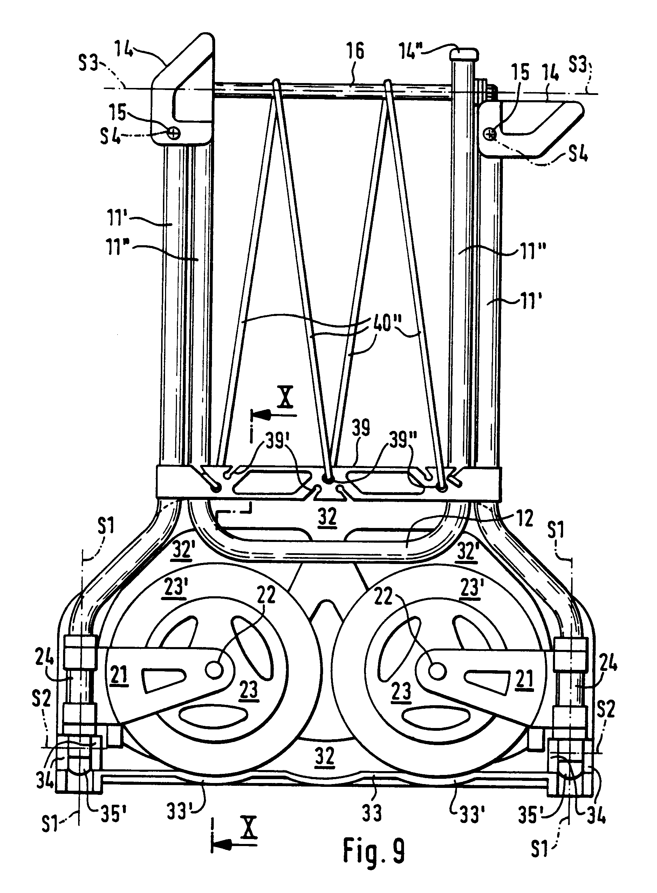

Die Figur 9 zeigt eine besondere Ausführungsform der Stechkarre im zusammengelegten Zustand, bei der die unteren Enden der unteren Längsträger das Fahrgestell bilden, indem sie direkt ohne zwischengeschalteten fahrgestellseitigen Querriegel 27 (Figur 1) die Hülsen 24 für die Radträger 21 aufnehmen. Im übrigen entspricht diese Darstellung der Darstellung der Figur 4. Der eingeschwenkte Oberrahmen mit den oberen Längsträgern 10˝ und dem sie verbindenden Quersteg 12 als Griff ist in den von den unteren Längsträgern 11′ gebildeten Rahmen eingeschwenkt, wobei die Schwenkachse S3 in der gewählten Darstellung koachsial zum Querriegel 16 liegt. Die Anlenkung erfolgt dabei in der vorbeschriebenen Weise (Figur 5). Die Sperrfallen 14 dienen, wie beschrieben, zur Sicherung des durch die Anlenkung gebildeten Gelenks, wobei die freien Enden der oberen Längsträger 11˝ mit einem elastischen Stopfen 14˝ verschlossen sind, der eine überstehende Wulst aufweist und der mit der Sperrfalle 14 klemmend zusammenwirkt, wobei die Weite der Sperrfalle 14 geringfügig kleiner ist als der Durchmesser der überstehenden Wulst dieses elastischen Stopfens 14˝. Dadurch wird die Schwenkung der Sperrfallen 14 um den Bolzen 15 und somit um ihre Schwenkachse S4 erschwert und ein unerwünschtes Lösen der gesperrten Verbindung verhindert. Die unteren Enden der unteren Längsträger 11′ sind entgegengesetzt jeweils nach außen gekopft, ihre in Rahmenebene liegenden, nach unten weisenden, Enden nehmen die Schwenkhülsen 24 der Radträger 21 auf. Mit Hilfe dieser Schwenkhülsen, die mit nicht näher bezeichneten Stellringen in der Höhe eingestellt und fixiert werden können, sind die Radträger 21 und mit die sen die Räder 23 mit ihren Radbandagen 23′ schwenkbar an den Vertikalrahmen angelenkt. Die Räder 23 sind auf Achsstummeln 22 gelagert, die die Drehbarkeit der Räder um die Drehachse D (Figur 1) sicherstellen. Die Schüppe ist in der vorbeschriebenen Weise um die Schwenkachse S2 schwenkbar ebenfalls an die unteren Enden der unteren Längsträger 11′ angelenkt mit Hilfe eines Lagerbockes 34. Um im eingeschwenkten Zustand eine einwandfreie Sicherung auch der eingeschwenkten Räder zu erhalten, ist der Schüppenrücken mit wellenförmigen Anformungen 33′ versehen, die der Form der Bandage 23′ so angepaßt sind, daß die Klemmung durch eine flächige Anlage erreicht wird. Dadurch wird die Flächenpressung erheblich vermindert und so einer Deformierung (die sich beim Fahren der Stechkarre als unangenehmes "Rumpeln" bemerkbar machen würde) vorgebeugt. Um die "Paket-Dicke" in Grenzen zu halten, wird bei doppelseitigem Radträger 21 (Figur 3) zweckmäßigerweise ein zumindest im Bereich des Radträgers vorhandener Ausschnitt 32′ im Schüppenblatt 32 vorgesehen. Dieser Ausschnitt erlaubt das Einführen des Radträgers 21 in das Schüppenblatt und er ermöglicht darüber hinaus Material- und Gewichtseinsparungen. Die unteren Enden der unteren Längsprofile 11′ (bzw. der nach unten weisenden umgebogenen Enden 27′ des fahrgestellseitigen Querriegels 27 - Figur 4) können bei geeigneter Anlenkung auch mit einem elastischen Stopfen 35′ verschlossen werden, wobei dieser Stopfen mit einer überstehenden Wulst versehen klemmend mit der Lageraufnahme 34 zusammenwirkt. Diese Klemmung ist sowohl im eingeschwenkten wie auch im ausgeschwenkten Zustand gegeben. Es versteht sich von selbst, daß im Bereich der Klemmung der Wulst angepaßte Ausnehmungen ein gewisses "Einrasten" erlauben, wobei es sich von selbst versteht, daß die Klemmwirkung erhalten bleiben muß. In der hier vorgeschlagenen Ausführungsform liegt der obere Rahmenteil im eingeklappten Zustand auf dem eingeklappten Schüppenblatt auf. Wird darüber hinaus ein weiterer unterer Querriegel 39 vorgesehen, ist die Lage des oberen Rahmenteils zwischen eingeklapptem Schüppen blatt und unterem Querriegel 39 gesichert. Der untere Querriegel 39 wird zweckmäßigerweise mit Einschnitten 39′ und Löchern 39˝ versehen, die ein elastisches Seil 40˝ aufnehmen, das als Ladungssicherung zwischen dem unteren Querriegel 39 und dem mittigen Querriegel 16 mehrfach hin- und hergeführt als Ladungssicherung dient.

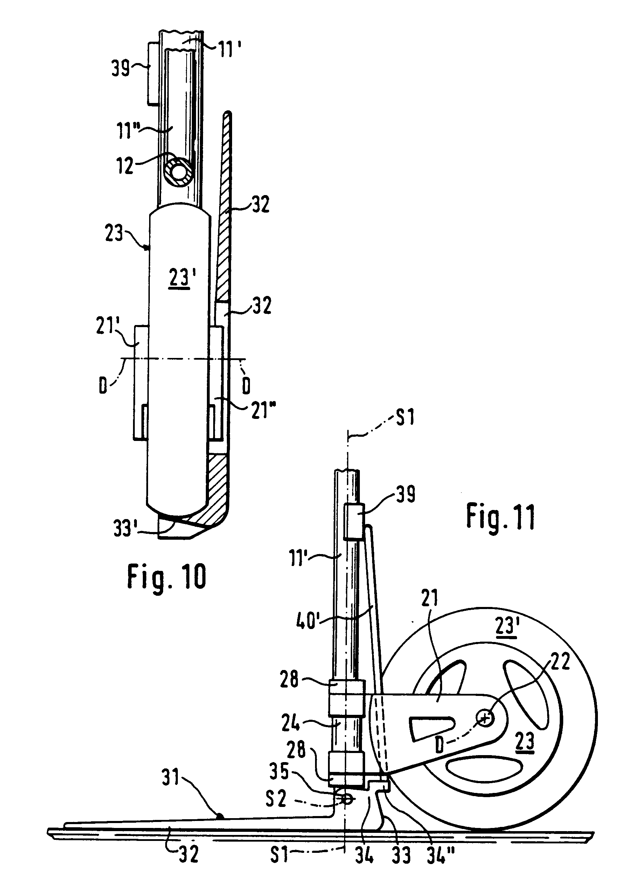

Die Figur 10 zeigt einen Schnitt entsprechend X-X (Figur 9), wobei zur besseren Unterscheidbarkeit das obere Längsprofil 11˝ mit einer geringeren Rohrstärke dargestellt ist als das untere Längsprofil 11′. Im eingeschwenkten Zustand nimmt die Ausnehmung 32′ (hier nur für den Bereich des Radträgers 21˝ gezeichnet) den dem Schüppenblatt 32 zugewandten Radträger 21˝ auf. Der entsprechend ausgeformte Schüppenrücken 33 legt sich dabei klemmend an die Radbandage 33′ des Rades 23. Damit ist das Rad im eingeschwenkten Zustand gesichert. Der obere Rahmenteil mit den oberen Längsprofilen 11˝ und dem querverlaufenden Griff 12 liegt dabei zwischen dem aufgeklappten Schüppenblatt 32 und dem unteren Querriegel 39 und ist über seine Klemmung im Bereich der Anlenkung (Figur 5,9) zwischen diesen beiden festgelegt.

Die Figur 11 zeigt das untere Ende der Stechkarre nach Figur 9 mit ausgeschwenktem Rad 23 und ausgeklappter Schüppe 31. Dabei steht das Rad 23 mit seiner Bandage 23′ auf einer Standfläche auf, auf der auch das Schüppenblatt 32 aufliegt. Die mit dem Bolzen 35 durch den Lagerbock 34 angelenkte Schüppe 31 weist einen nach hinten verlängerten Lagerbock 34˝ auf, der über den Schüppenrücken 33 hinaus geführt ist. Diese Lagerbockverlängerung 34˝ wirkt mit einer Anformung am Radträger 21 zur Sicherung der ausgeschwenkten Position zusammen. Um ein nach rückwärts gerichtetes Haftmoment zu erhalten, wird zweckmäßigerweise von der Lagerbockverlängerung 34˝ zum unteren Querriegel 39 ein elastisches Verbindungsglied 40′ - vorzugsweise ein Gummiseil - geführt, dessen elastische Kraft ein Gegenmoment erzeugt und so einem Überkippen des Vertikalrahmens vorbeugt.

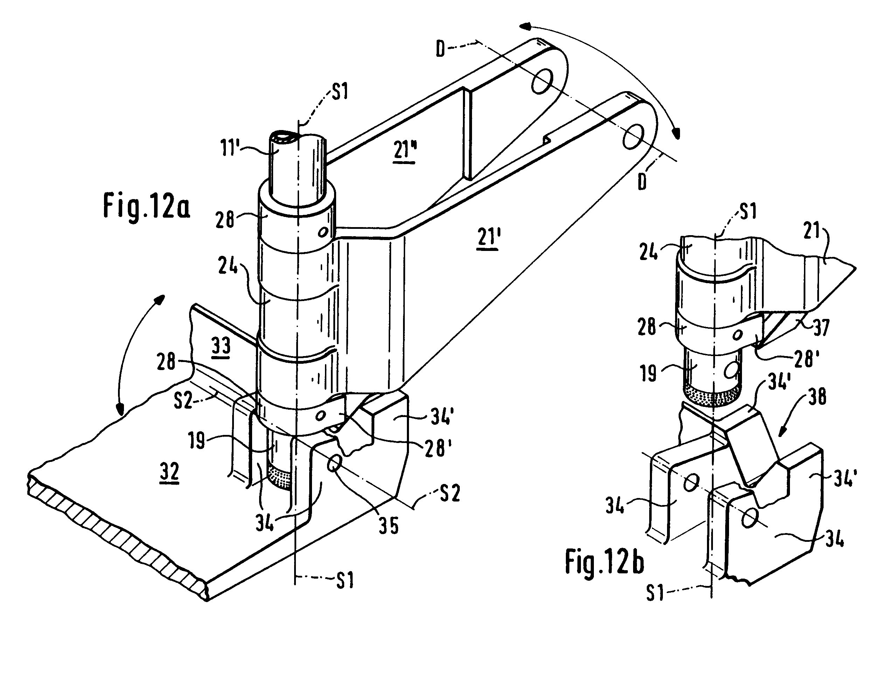

Die Figur 12 zeigt in einem perspektivischen Schema das Zusammenwirken von Schüppe und Radträger zur Sicherung der Position des ausgeschwenkten Radträgers, wobei die herausgezeichnete Einzelheit der Fig. 12 a die Sicherungselemente deutlich zum Ausdruck kommen läßt. In der Figur 12 ist das untere Ende des unteren Längsprofils 11′ dargestellt, auf das mit der Hülse 24 der Radträger 21 entsprechend dem eingezeichneten Pfeil drehbar aufgesetzt ist, wobei zwei am unteren Längsträger 11′ festgelegte Stellringe 28 die Hülse 24 am unteren Längsprofil 11′ in bezug auf die Höhenlage des Radträgers 21 festlegen, wobei jedoch Radträger mit Hülse um die Schwenkachse S 1 drehbar bleiben. Der gabelförmig ausgebildete Radträger 21 mit den beiden Trägerteilen 21′ und 21˝ weist Bohrungen zur Aufnahme der nicht näher dargestellten Achse des ebenfalls nicht näher dargestellten Rades auf, das eingesetzt in den Radträger 21 um die Drehachse D drehbar ist. Zwischen den beiden Radträgern nahe der Hülse 24 ist die V-förmige Anformung 37 als radträgerseitiges Sicherungsmittel vorgesehen. Der untere Sicherungsring 28 weist auf seiner äußeren Seite einen Vorsprung 28′ auf, der ein Ausschwenken des Radträgers über die Sollage von etwa 10° erlaubt. Dieses Ausschwenken erleichtert das Aufstellen der Stechkarre: Bei liegender, zusammengelegter Stechkarre werden die beidseitigen Radträger 21 über ihre Sollage hinausgeschwenkt und befinden sich somit nicht in einem labilen Gleichgewicht, sondern in einer stabilen Gleichgewichtslage, so daß ein unerwünschtes Zurückfallen in die Einschwenk-Stellung verhindert ist bis die Schüppe ausgeschwenkt ist und die Sicherungsmittel angeschnäbelt haben. Nach dem Anschnäbeln der Sicherungsmittel werden aufgrund der an ihnen vorgesehenen Schrägflächen beide Radträger 21 zwangsweise in die 90° Stellung geführt. Das dazu notwendige Schwenken der Schüppe wird dadurch möglich, daß am Außenrand der Schüppe Mit Schüppenblatt 32 und Schüppenrücken 33 verbunden ein gabelförmiger Lagerbock 34 zur Anlenkung an den Vertikalrahmen angeordnet ist, in dem das untere Ende 19 des unteren Längsträgers 11′ mittels eines Bolzens 35 um die Schwenkachse S 2 (entsprechend dem eingezeichneten Pfeil) schwenkbar gelagert ist. Dabei verläuft die Schwenkachse S 2 im rechten Winkel zur Schwenkachse S 1, während die Schwenkachse S 2 und die Drehachse D parallel zueinander liegen. Der Lagerbock 34 weist zum Schüppenrücken gerichtete Verlängerungen 34′ auf, zwischen denen eine V-förmige Aufnahme 38 derart ausgebildet ist, daß in sie die V-förmige Anformung 37 des Radträgers formschlüssig beim Schwenken der Schüppe um die Schwenkachse S 2 eingeführt wird. Durch den so hergestellten Formschluß wird der ausgeschwenkte Radträger 21 in seiner 90°-Stellung fixiert, wobei dieser Eingriff umso fester wird, je größer die Last ist, die auf dem Schüppenblatt 32 aufliegt.

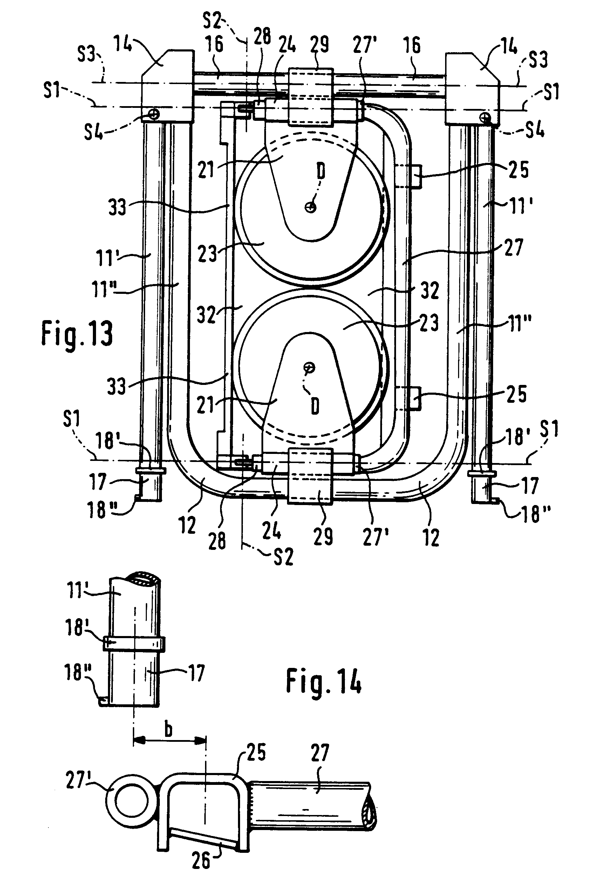

Eine weitere Ausführungsform zeigen die Figuren 13 und 14, bei denen ausgehend von der Ausführungsform nach Figur 1 bis 4 eine Weiterbildung dadurch erreicht wurde, daß der Vertikalrahmen vom Fahrgestell trennbar ist. Durch diese Ausführung läßt sich eine weitere Verringerung der Größe der zusammengelegten Stechkarre dadurch erreichen, daß das Fahrgestell im Inneren des zusammengeklappten Vertikalrahmens querliegend eingesetzt werden kann. Der eingeklappte Querrahmen besteht aus den oberen Längsprofilen 11˝, die über den Griff 12 als Querstück miteinander verbunden sind und die schwenkbar um die Schwenkachse S3 an die unteren Längsprofile 11′ angelenkt sind. Die Sicherung der Anlenkung geschieht in üblicher Weise mit den Sperrfallen 14, dabei ist es für die Ausführung ohne Bedeutung, ob - wie hier dargestellt - der mittige Querriegel 16 koachsial zur Schwenkachse S3 des Oberrahmens liegt oder nicht. Um die Trennbarkeit von Vertikalrahmen und Fahrgestell zu erreichen, weisen die unteren Enden der unteren Längsprofile 11′ Steckenden 17 auf, die mit die Einstecktiefe begrenzenden Anschlägen 18′ und mit ein unerwünschtes Abziehen verhindern den Sperrnasen 18˝ versehen sind. Das im Inneren des eingeklappten Vertikalrahmens querliegend angeordnete Fahrgestell mit seinen beidseits an die umgebogenen Enden 27′ des fahrgestellseitigen Querriegels 27 mit den Hülsen 24 angelenkten Radträger 21 sowie den Rädern 23 ist mit der von Schüppenblatt 32 und Schüppenrücken 33 gebildeten Schüppe versehen, wobei die Radträger um die Schwenkachse S1 und die Schüppe um die rechtwinklig dazu liegende Schwenkachse S2 schwenkbar sind. Der fahrgestellseitige Querriegel 27 ist mit Steckaufnahmen 25 versehen, in die die Steckenden 17 der unteren Längsprofile 11′ lösbar festgelegt sind. Die Ausbildung dieser Steckverbindung zeigt im einzelnen die Figur 14, die sich auf die eine der beiden Seiten bezieht, wobei die andere Seite entsprechend spiegelbildlich ausgebildet ist. In der gewählten Darstellung ist die Steckaufnahme 25 in den fahrgestellseitigen Querriegel 27 eingefügt; es versteht sich von selbst, daß die Steckaufnahme 25 in gleicher Weise auch auf den fahrgestellseitigen Querriegel 27 aufgesetzt werden kann. In der Darstellung sind weiter Querriegel 27 mit Steckaufnahme 25 und unteres Längsprofil 11′ mit Steckende 17 um 90° gedreht dargestellt. In der Geometrie sind die Steckaufnahmen 25 in einer derartigen Weite voneinander angeordnet, daß beidseits eine Differenz b zur Weite des unteren Rahmenteils besteht, wobei das Fixieren der Sperrnase 18˝ durch die elastischen Kräfte des unteren Rahmenteils bewirkt wird. Dabei ist die Einstecktiefe des Steckendes 17 durch einen Anschlag 18′ begrenzt, wobei die freie Weite zwischen dem Anschlag 18′ und der ihm zugewandten Kante der Sperrnase 18˝ gleich der Höhe des Profilstücks der Steckaufnahme 25 ist. Zur besseren Sicherung der Verbindung wird darüber hinaus die Steckaufnahme 25 derart ausgebildet, daß eine Schrägfläche 26 die Weite der Stecköffnung bis hin zum Durchmesser des Steckendes 17 in Spannrichtung verringert. Die hier gewählte Darstellung der nach außen gerichteten Spannrichtung kann auch durch eine nach innen gerichtete Spannung ersetzt werden. Die Festlegung des Fahrgestells im Inneren des eingeklappten Vertikalrahmens erfolgt zweckmäßigerweise mit übergreifenden Klammern.

Bei allen Ausführungsformen wird die Dicke der zusammengelegten Stechkarre im wesentlichen durch die Radbreite bestimmt. Der zusammengelegte Zustand wird durch elastische Klemmwirkungen von Radbandagen bzw. elastischen Verschlußstopfen gesichert. Um die Stechkarre einwandfrei fahren zu können,dürfen die Radträger mit ihren Rädern nicht "flattern". Um dies auszuschalten, wird der Radträger allein mit der ausgeschwenkten Schüppe festgelegt, wobei konus-, keil- oder V-förmige Anformungen eine einwandfreie Festlegung der Radträger bewirken, die mit zunehmender Schüppen-Belastung fester wird. Die Konus-, Keil- oder V-Form gestattet darüber hinaus das Ausschwenken der Radträger über ihre 90°-Position, so daß beim Ausschwenken der Radträger bei liegender Stechkarre eine einem labilen Gleichgewicht entsprechende Stellung der Radträger vermieden wird, ohne daß das Einführen der miteinander zusammenwirkenden Sicherungsmittel behindert wird. Der obere Rahmenteil des geteilten Vertikalrahmens kann koplanar in den Unterrahmen eingeschwenkt werden, wobei bei der Ausführungsform ohne fahrgestellseitigen Querriegel das Griffteil so weit an die Radbandagen heranreichen kann, daß es sich auf die eingeklappten Räder legt. Die Sicherung des Klappgelenks beider Rahmenteile wird durch im Querschnitt U-förmige Sperrfallen übernommen, die auch das im Arbeitszustand auftretende Biegemoment übertragen. Ein elastisches Klemmteil sichert die Sperrfallen gegen unbeabsichtigtes Aufkippen. Soll die Stechkarre eingeklappt werden, müssen zunächst die Sperrfallen seitlich nach außen geklappt werden, dann das obere Rahmenteil eingeschwenkt werden und schließlich die Sperrfallen zur Sicherung dieser Stellung wieder zurückgeklappt werden. Ein unterer Quersteg ist mit Loch-Schlitzkombinationen versehen, in die ein elastisches Gummistrops eingeführt und festgelegt werden kann. Damit lassen sich Ladungssicherungen mit variablem Abstand vorsehen, so daß auch kleinvolumige Lasten nicht durch die Zwischenräume fallen. Um beim Abstellen einem Überkippen des Vertikalrahmens der klappbaren Stechkarre vorzubeugen, sind elastische Stopfen im Bereich der Anlenkung der Schüppe vor gesehen, die durch eine Klemmung mit dem Schüppenblatt und/oder dem Lagerbock einem Überkippen des Vertikalrahmens vorbeugen. Alternativ dazu kann ein elastisches Zugglied vom Schüppenrücken zum unteren Quersteg ein Gegenmoment erzeugen, das dem Überkippen vorbeugt. Diese Lösung hat darüber hinaus den Vorteil, daß sie das Aufstellen der Stechkarre zumindest beim Ausschwenken der Schüppe unterstützt. Um die Stechkarre mit Rädern nicht zu kleinen Durchmessers versehen zu können und sie trotzdem handlich zu halten, ist es vorteilhaft, den Vertikalrahmen oberhalb des Fahrgestells mit verringernder Breite auszubilden, entweder durch einen überstehenden fahrgestellseitigen Querträger oder aber durch auswärts gerichtete Abkröpfungen der unteren Längsträger des Vertikalrahmens. Die Last aufnehmende Oberfläche der Schüppe selbst weist vorteilhaft eine Antirutsch-Struktur oder einen Antirutsch-Belag auf.

## Patentansprüche

1. Zusammenlegbare, zweirädrige Stechkarre mit einem Vertikalrahmen (10) mit einem Paar Längsprofilen (11),an dessen unteren Ende eine Schüppe (31) als Lastaufnahmemittel (30) und ein Fahrgestell (20) mit zwei Radträgern (21) mit je einem Rad (23) vorgesehen sind und dessen oberes Ende einen Schiebebügel mit einem Quersteg (12) als Griff bildet, wobei die Längsprofile (11) des Vertikalrahmens (10) zwischen dem Fahrgestell (20) und dem Quersteg (12) und jeweils im Abstand davon durch mindestens einen Querriegel (16;27) miteinander verbunden sind, wobei jeder Radträger (21) um eine in Vertikalrahmen-Ebene verlaufende Schwenkachse (S1) schwenkbar an das untere Ende des ihm zugeordneten Längsprofils (11) bzw. an ein dazu paralleles in der Vertikalrahmen-Ebene liegendes umgebogenes Ende (27˝) des Querriegels (27) angelenkt ist, wobei die Schüppe (31) um eine rechtwinklig zu den Schwenkachsen (S1) der Radträger (21) verlaufende weitere Schwenkachse (S2) an die unteren Enden der Längsprofile (11) bzw. an die umgebogenen Enden (27˝) des Querriegels (27) angelenkt ist und wobei Sicherungsmittel die ausgeschwenkten Radträger (21) festlegen, **dadurch gekennzeichnet,** daß die seiner Schwenkachse (S2) zugewandte Seite der Schüppe (31) einen rechtwinklig zur Schüppenfläche (32) aufgebogenen Schüppenrücken (33) und im Bereich der ausgeschwenkten Radträger (31) mit die sen beim Ausschwenken der Schüppe (31) zusammenwirkende Sperrmittel aufweist, wobei die Sperrmittel die ausgeschwenkten Radträger (21) in einer Winkelstellung von 90° zur Schwenkachse (S 2) der Schüppe (31) festlegen und daß die Längsprofile (11) des Vertikalrahmens (10) aus je einem unteren Längsprofil (11′) und je einem oberen Längsprofil (11˝) gebildet sind, wobei die oberen Längsprofile (11˝) mit einer in Vertikalrahmen-Ebene liegenden, parallel zur Schwenkachse (S 2) der Schüppe (31) ausgerichtete Schwenkachse (S 3) an die einander zugewandten Seiten der unteren Längsprofile (11) derart angelenkt sind, daß das Oberteil (10˝) des Vertikalrahmens (10) vorzugsweise coplanar in dessen Unterteil (10′) einschwenkbar ist und das Gelenk mit dort vorgesehenen, die unteren und die oberen Längsprofilde (11′, 11˝) im ein- und im ausgeklappten Zustand übergreifenden Sperrmitteln schwenkbar ist.

2. Stechkarre nach Anspruch 1, **dadurch gekennzeichnet,** daß die Sperrmittel zum Festlegen des ausgeschwenkten Radträgers (21) als etwa formschlüssig mit dem Radträger (21) bzw. einer Anformung daran zusammenwirkenden Ausnehmung (33′) im Schüppenrücken (33) ausgebildet sind, wobei vorzugsweise die Flanken der Ausnehmung V-förmig angestellt sind.

3. Stechkarre nach Anspruch 1, **dadurch gekennzeichnet,** daß das Schüppenblatt (32) beidseits einen Lagerbock (34) zur Anlenkung an die unteren Enden der Längsprofile (11) bzw. die umgebogenen Enden (27˝) des Querriegels (27) aufweist und die Sperrmittel als dem Schüppenblatt (32) abgewandt angeordnete Lagerbock-Verlängerungen (34′) ausgebildet sind, die mit den Radträgern (21) oder einer Anformung (37) daran zusammenwirken.

4. Stechkarre nach Anspruch 3, **dadurch gekennzeichnet,** daß beide Seitenteile (35) des Lagerbocks (34) verlängert sind und zwischen ihnen eine V-förmige Aufnahme (34′) für eine entsprechende V-förmige Anformung (21′) an dem Radträger (21) angeordnet ist, wobei die Höhe der V-förmigen Anformung(21′) höchstens gleich der Tiefe der V-förmigen Aufnahme (34′) ist.

5. Stechkarre nach einem der Ansprüche 2 bis 4, **dadurch gekennzeichnet,** daß eine Anschlagnase (28′) vorzugsweise am unteren der die Schwenkhülse (24) festlegenden Stellringe (28) vorgesehen ist, die das Ausschwenken des Radträgers (21) auf einen Schwenkwinkel geringfügig größer als 90° begrenzt.

6. Stechkarre nach einem der Ansprüche 1 bis 5, **dadurch gekennzeichnet,** daß der Radträger (21) U-förmig ausgebildet das Rad von beiden Seiten umfaßt und daß im Schüppenblatt (32) je eine Ausnehmung (32′) vorgesehen ist, in die bei eingeschwenkten Radträgern (21) und aufgeklapptem Schüppenblatt (32) der dem Schüppenblatt (32) zugewandte Teil des Radträgers (21) liegt.

7. Stechkarre nach einem der Ansprüche 3 oder 4, **dadurch gekennzeichnet,** daß das untere Ende der Längsprofile (11′) im Bereich des Lagerbockes (34) einen elastischen Stopfen (35) aufweist, der mit dem Lagerbock (34) klemmend zusammenwirkt.

8. Stechkarre nach einem der Ansprüche 1 bis 6, **dadurch gekennzeichnet,** daß der Abstand der Drehachse (D) der Räder (23) von der Innenseite des Schüppenrückens (33) der aufgeklappten Schüppe (31) höchstens gleich dem Halbmesser des Rades (23) einschließlich dessen Radbandage (23′) ist und die Radbandage (23′) mit dem Schüppenrücken (33) klemmend zusammenwirkt, wobei vorzugsweise der Schüppenrücken (33) im Bereich der Klemmung der Räder (23) der Radform angepaßt wellenförmig ausgeformt ist.

9. Stechkarre nach einem der Ansprüche 1 bis 8, **dadurch gezeichnet,** daß zur Sicherung der gelenkigen Verbindung von unterem und oberen Längsprofil (11′, 11˝) eine Sperrfalle (14) vorgesehen ist, die schwenkbar vorzugsweise an das untere Längsprofil (11′) angelenkt ist, wobei ihre Schwenk achse (S 4) rechtwinklig zur Ebene des Vertikalrahmens (10) verläuft und wobei die Sperrfalle (14) mit einem im wesentlichen U-förmigen Querschnitt sowohl im eingeklappten als auch im ausgeklappten Zustand des Oberteils (10˝) des Vertikalrahmens (10) das untere und das obere Längsprofil (11′, 11˝) im Bereich der gelenkigen Verbindung übergreift.

10. Stechkarre nach Anspruch 9, **dadurch gekennzeichnet,** daß die Sperrfalle (14) einen einen Federfinger (14′) abteilenden Einschnitt aufweist, wobei der Federfinger (14′) eine Formung derart erhält, daß er das der Schwenkachse (S 4) der Sperrfalle (14) abgewandte Längsprofil (11′; 11˝) zumindest geringfügig hintergreift.

11. Stechkarre nach Anspruch 9 oder 10, **dadurch gekennzeichnet,** daß in einem gewissen Abstand von der gelenkigen Verbindung der unteren und der oberen Längsprofile (11′, 11˝) jedoch innerhalb des von der Sperrfalle (14) übergriffenen Bereichs ein die einander zugewandten Längsprofile (11˝) des oberen Vertikalrahmens (10˝) verbindender Querriegel (16) angeordnet ist, dessen nach außen weisende Enden mit elastischen Stopfen versehen, klemmend mit den beiden anderen Längsprofilen (11′) im eingeschwenkten oder im ausgeschwenkten Zustand zusammenwirken.

12. Stechkarre nach Anspruch 9 oder 10, **dadurch gekennzeichnet,** daß das Ende vorzugsweise des unteren Längsprofils (11′) einen elastischen Stopfen (**14**˝) aufweist mit einer überstehenden Wulst, deren Durchmesser geringfügig größer ist als die lichte Weite des U-Profils der Sperrfalle (14), wobei die überstehende Wulst klemmend mit der Sperrfalle (14) zusammenwirkt.

13. Stechkarre nach einem der Ansprüche 1 bis 12, **dadurch gekennzeichnet,** daß die beiden unteren Längsprofile (11′) des unteren Rahmenteils (10′) mit einem aufgesetzten Quersteg (39) verbunden sind, der Nuten und/oder Bohrungen aufweist.

14. Stechkarre nach Anspruch 13, **dadurch gekennzeichnet,** daß ein vorzugsweise als Gummischnur ausgebildetes Zugglied (40′) zwischen dem Quersteg (39) und dem Schüppenrücken (33) vorgesehen ist.

15. Stechkarre nach Anspruch 13 oder 14, **dadurch gekennzeichnet,** daß zwischem dem Quersteg (39) und dem Querriegel (16) eine vorzugsweise als Gummiseil ausgebildete Ladungssicherung (40˝) vorgesehen ist.

16. Stechkarre nach einem der Ansprüche 1 bis 15, **dadurch gekennzeichnet,** daß der Vertikalrahmen (10) und das Fahrgestell (20) mit Lastaufnehmemittel (30) lösbar miteinander verbunden sind, vorzugsweise mit einer Steckverbindung, wobei der fahrgestellseitige Querriegel (27) beidseits Steckaufnahmen (25) für die Steckenden (17) des Vertikalrahmens (10) und umgebogene Enden (27˝) zur Aufnahme der Radträger-Schwenkhülsen (24) als untere Enden des Vertikalrahmens (10) aufweist, wobei die Achsen der Steckaufnahmen und der Profilstücke in Vertikalrahmen-Ebene und etwa parallel zueinander liegen.

17. Stechkarre nach Anspruch 15, **dadurch gekennzeichnet,** daß die Steckenden (17) der Längsprofile (11) eine an ihren Enden angeordnete, nach außen weisende, Sperrnase (18˝) aufweisen, wobei die Steckenden (17) mit einem die Einführtiefe begrenzenden Anschlag (18′) versehen sind und wobei vorzugsweise der Abstand der Steckaufnahmen (25) voneinander geringfügig kleiner ist als der Abstand der Steckenden (17) der Längsprofile (11) des entspannten Vertikalrahmens (10).

18. Stechkarre nach Anspruch 16 oder 17, **dadurch gekennzeichnet,** daß jede Steckaufnahme (25) eine die quer zur Vertikalrahmen-Ebene gemessene Weite in Spreizrichtung des Vertikalrahmens (10) verringernde Klemmschräge (26) aufweist.

## Claims

1. A two-wheeled folding trolley having a vertical frame (10) with a pair of longitudinal side members (11), at the lower end of which a load platform (31), a load receiving means (30) and a chassis (20) with two wheel supports (21) having one wheel (23) each are provided, and the upper end of which forms a U-shaped slide having a cross piece (12) serving as a handle, the longitudinal side members (11) of the vertical frame (10) being connected with each other between the chassis (20) and the cross piece (12) and at a distance therefrom by at least one cross bar (16, 27), each wheel support (21) being hinged to the lower end of the longitudinal side member (11) associated thereto or to a bent end (27˝) of the cross bar (27), which extends parallel thereto and is in the plane of the vertical frame, so that it pivots around a pivoting axis (S1) extending in the plane of the vertical frame, the load platform (31) being hinged to the lower end of the longitudinal side members (11) or to the bent ends (27˝) of the cross bar (27), which extends parallel thereto and is in the plane of the vertical frame, so that it pivots around a further pivoting axis (S2) extending at a right angle to the pivoting axes (S1) of the wheel supports (21), and the securing means fixing the opened out wheel supports (21), characterised in that the side of the load platform (31) which faces the pivoting axis (S2) has a load platform back (33) bent upwards at a right angle relative to the load surface of the platform (31) and locking means interacting during the opened out process of the load (31) with the opened out wheel supports (21) in the area of said wheel supports, the locking means fixing the opened out wheel supports (21) in an angular position of 90° relative to the pivoting axis (S2) of the load platform (31), and in that the longitudinal side members (11) of the vertical frames (10) are each formed by a lower longitudinal side member (11′) and an upper longitudinal side member (11˝), the upper longitudinal side members (11˝) being hinged, with a pivoting axis (S3) extending in the plane of the vertical frame and being orientated parallel to the pivoting axis (S2) of the load platform (31), to the facing sides of the lower longitudinal side members (11′) such that the top portion (10˝) of the vertical frame (10) can be swung into the bottom portion so that it is preferably co-planar therewith, and the hinge can be pivoted with locking means thereat and extending over the lower and the upper longitudinal side members (11′, 11˝) both in the folded-in and the folded-up conditions.

2. Folding trolley according to claim 1, characterized in that the locking means for fixing the opened out wheel support (21) are formed in the back (34) of the load platform as a recess (33′) interacting in a substantially conjugate manner with the wheel support (21) or an attachment thereto, the flanks of the recess being arranged preferably in a V-shaped configuration.

3. Folding trolley according to claim 1, characterized in that the load platform plate (32) has a plummer block (34) on both sides, to which the lower ends of the longitudinal side members (11) or the bent ends (27˝) of the cross bar (27) are hinged, and the locking means are formed as plummer block extensions (34′) positioned such that they face away from the load platform plate (32), said plummer block extensions (34′) interacting with the wheel supports (21) or an attachment (37) thereto.

4. Folding trolley according to claim 3, characterized in that both lateral portions (35) of the plummer block (34) are extended and a V-shaped receptacle (34′) for a corresponding V-shaped attachment (21′) is positioned therebetween, the height of the V-shaped attachment (21′) being no greater than the depth of the V-shaped receptacle (34′).

5. Folding trolley according to any one of claims 2 to 4, characterized in that a stop nose (28′) is provided preferably at the lower of the actuating rings (28) fixing the pivot sleeve (24), which stop nose (28′) limits the pivoting path of the wheel support (21) to a pivoting angle of slightly more than 90°.

6. Folding trolley according to any one of Claims 1 to 5, characterized in that the wheel support (21) has a U-shaped configuration and encompasses the wheel from both sides, and that one recess (32′) is provided in the load platform plate (32), respectively, wherein lies the part of the wheel support (21) which faces the load platform plate (32) when the wheel support (21) is folded in and the load platform plate (32) is folded out.

7. Folding trolley according to any one of claims 3 to 4, characterized in that the lower end of the longitudinal side members (11′) has an elastic plug (35) in the area of the plummer block (34), which is in clamping relationship with the plummer block (34).

8. Folding trolley according to any one of claims 1 to 6, characterized in that the distance of the rotational axis (D) of the wheels (23) from the inside of the load platform plate (33) of the folded-up load platform (31) is no greater than the radius of the wheel (23) including its wheel rim (23′) and the wheel rim (23′) is in clamping relationship with the back (33) of the load platform, the back (33) of the load platform preferably being wave-shaped in the clamping area of the wheels (23) so that it adapts to the contour of the wheel.

9. Folding trolley according to any one of claims 1 to 8, characterized in that for securing the hinged link between the lower and the upper longitudinal side members (11′, 11˝) a catch (14) is provided, which is hinged to the lower longitudinal side member (11′) preferably in a pivotable manner, its pivoting axis (S4) extending at a right angle relative to the plane of the vertical frame (10), and the catch (14), which has an essentially U-shaped cross-section, reaching over both the lower and upper longitudinal side members (11′, 11˝) in the area of the hinged link both in the folded-in and in the folded-out conditions of the top portion (10˝) of the vertical frame (10).

10. Folding trolley according to claim 9, characterized in that the catch (14) has a notch dividing off a spring finger (14′), which is formed such that it extends at least slightly around the longitudinal side member (11′, 11˝) facing away from the pivot axis (S4) of the catch (14).

11. Folding trolley according to Claims 9 or 10, characterized in that at a certain distance from the hinged link of the lower and the upper longitudinal side members (11′, 11˝) but within the area over which the catch (14) extends, there is located a cross bar (16) connecting the longitudinal side members (11˝) of the upper vertical frame (10˝) which face each other, the outwardly directed ends being provided with elastic plugs and being in a clamping relationship with the two other longitudinal side members (11′) in the folded-in and in the folded-out condition.

12. Folding trolley according to claims 9 or 10, characterized in that the end preferably of the lower longitudinal side member (11′) has an elastic plug (14˝) and a protruding bulge, the diameter of which is slightly greater than the inside diameter of the U-shaped side members of the lock catch (14), the protruding bulge being in a clamping relationship with the catch (14).

13. Folding trolley according to any one of claims 1 to 12, characterized in that the two lower longitudinal side members (11′) of the lower frame portion (10′) are connected with an attached cross web having slits and/or bores.

14. Folding trolley according to claim 13, characterized in that a tensioning member (40′), preferably in the form of an elasticated strap, is provided between the cross web (39) and the back (33) of the load platform.

15. Folding trolley according to claims 13, or 14, characterized in that load securing means (40˝) preferably in the form of an elasticated strap are provided between the cross web (39) and the cross bar (16).

16. Folding trolley according to any one of claims 1 to 15, characterized in that the vertical frames (10) and the chassis (20) with the load receiving means (30) are detachably connected to each other, preferably by a plug connection, the cross bar (27) on the chassis side having on both sides plug receptacles (25) for the plug ends (17) of the vertical frame (10) and bent ends (27˝) for receiving the wheel support pivot sleeves (24) as the lower ends of the vertical frame (10), the axes of the plug receptacles and the side member sections extending approximately parallel to each other in the plane of the vertical frame.

17. Folding trolley according to claim 15, characterised in that the plug ends (17) of the longitudinal side members (11) have an outwardly directed lock nose (18˝) arranged at their ends, the plug ends (17) being provided with a stop (18′) limiting the insertion depth, and the distance of the plug receptacles (25) being preferably slightly smaller than the distance of the plug ends (18) of the longitudinal side members (11) of the relaxed vertical frame (10).

18. Folding trolley according to claims 16 or 17, characterized in that each plug receptacle (25) has a clamping slant (26) reducing the width of the vertical frame (10) in the direction of expansion as measured perpendicular relative to the plane of the vertical frame.

## Revendications

1. Diable pliant à deux roues comprenant un cadre vertical (10) avec une paire de profilés longitudinaux (11), à l'extrémité inférieure desquels sont prévus une palette (31) constituant un moyen de support de charge (30) et un train de roues (20) avec deux supports de roue (21) avec chacun une roue (23), et dont l'extrémité supérieure forme un étrier de poussée comprenant une traverse (12) formant poignée, les profilés longitudinaux (11) du cadre vertical (10) étant reliés l'un à l'autre entre le train de roues (20) et la traverse (12) et respectivement à une certaine distance de cette dernière par au moins une entretoise (16; 27), chaque support de roue (21) étant articulé de façon pivotante autour d'un axe de pivotement (S1) situé dans le plan du cadre vertical à l'extrémité inférieure du profilé longitudinal (11) qui lui est associé ou à une extrémité (27˝) de l'entretoise (27) qui est coudée et qui lui est parallèle dans le plan du cadre vertical, la palette (31) étant articulée aux extrémités inférieures des profilés longitudinaux (11) ou des extrémités coudées (27˝) de l'entretoise (27) autour d'un autre axe de pivotement (S2) qui est perpendiculaire aux axes de pivotement (SI) des supports de roue (21), et des moyens de fixation maintenant les supports de roue (21) à l'état sorti, caractérisé en ce que le côté de la palette (31) qui est tourné vers son axe de pivotement (S2) comprend une partie de dos (33) qui est à angle droit par rapport au plateau (32) de la palette et des moyens de blocage coopérant avec elle dans la région des supports de roue (31) à l'état sorti lors de l'abaissement de la palette (31), les moyens de blocage maintenant les supports de roue (21) à l'état sorti dans une position angulaire à 90° par rapport à l'axe de pivotement (S2) de la palette (31),et en ce que les profilés longitudinaux (11) du cadre vertical (10) sont constitués chacun par un profilé longitudinal inférieur (11′) et par un profilé longitudinal supérieur (11˝), les profilés longitudinaux supérieurs (11˝) étant articulés aux côtés tournés l'un vers l'autre des profilés longitudinaux inférieurs (11′) par un axe de pivotement (S3) situé dans le plan du cadre vertical et orienté parallèlement à l'axe de pivotement (S2) de la palette (31) de manière telle que la partie supérieure (10˝) du cadre vertical (10) puisse être rabattue a l'intérieur de sa partie inférieure (10′) de préférence de façon coplanaire et que le joint qui y est puisse pivoter avec des moyens de blocage qui recouvrent les profilés longitudinaux inférieurs et supérieurs (11′, 11˝) à l'état plié et déplié.

2. Diable selon la revendication 1, caractérisé en ce que les moyens de blocage destinés à la fixation du support de roue (21) à l'état sorti sont constitués par un évidement (33′) de la partie arrière (33) de la palette qui coopère sensiblement par concordance de formes avec le support de roue (21) ou avec une formation qui y est formée, les flancs de l'évidemment étant de préférence en forme de V.

3. Diable selon la revendication 1, caractérisé en ce que le plateau (32) de la palette comprend de chaque côté un palier (34) permettant l'articulation aux extrémités inférieures des profilés longitudinaux (11) ou des extrémités coudées (27˝) de l'entretoise (27) et les moyens de blocage sont constitués sous forme de prolongements (34′) des paliers qui sont à l'opposé du plateau (32) de la palette, prolongements qui coopèrent avec les supports de roue (21) ou avec une formation (37) prévue sur eux.

4. Diable selon la revendication 3, caractérisé en ce que les deux parties latérales (35) du palier (34) sont prolongées et en ce qu'un logement en forme de V (34′) destiné à une formation en forme de V correspondante (21′) du support de roue (21) est prévue entre eux, la hauteur de la formation en V (21′) étant au maximum égale à la profondeur du logement en forme de V (34′).

5. Diable selon l'une quelconque des revendications 2 à 4, caractérisé en ce qu'une saillie de butée (28′) est prévue de préférence à la partie inférieure de la bague de butée (28) qui maintient la douille de pivotement (24), saillie qui limite le pivotement du support de roue (21) sur un angle de pivotement qui est légèrement supérieur à 90°.

6. Diable selon l'une quelconque des revendications 1 à 5, caractérisé en ce que le support de roue (21) qui est constitué en forme de U entoure la roue par ses deux côtés et en ce qu'un évidement pour chacun d'eux (32′) est prévu dans le plateau (32) de la palette, dans lequel se dispose la partie du support de roue qui est tournée vers le plateau (32) de la palette quand les supports de roue (21) sont rentrés et le plateau (32) de la palette est remonté.

7. Diable selon la revendication 3 ou 4, caractérisé en ce que l'extrémité inférieure des profilés longitudinaux (11′) comprend dans la région du palier (34) un bouchon élastique (35) qui coopère par serrage avec le palier (34).

8. Diable selon l'une quelconque des revendications 1 à 6, caractérisé en ce que la distance entre l'axe de rotation (D) des roues (23) et le côté interne de la partie arrière (33) de la palette (31) à l'état remonté est au maximum égal au demi-diamètre de la roue (23), y compris son bandage (23′), et en ce que le bandage (23′) coopère par serrage avec la partie arrière (33) de la palette, cette partie arrière (33) de la palette ayant avantageusement une forme ondulée dans la région de serrage des roues (23), qui est adaptée à la forme des roues.

9. Diable selon l'une quelconque des revendications 1 à 8, caractérisé en ce que pour bloquer la liaison articulée entre les profilés longitudinaux inférieur et supérieur (11′, 11˝) est prévu un loquet de blocage (14) qui est articulé de façon pivotante de préférence sur le profilé longitudinal inférieur (11′), son axe de pivotement (S4) étant perpendiculaire au plan du cadre vertical (10) et le loquet de blocage (14) dont la section transversale est sensiblement celle d'un U recouvrant,aussi bien à l'état plié qu'à l'état déplié de la partie supérieure (10˝) du cadre vertical (10), le profilé longitudinal inférieur et le profilé longitudinal supérieur (11′, 11˝) dans la région de la liaison articulée.

10. Diable selon la revendication 9, caractérisé en ce que le loquet de blocage (14) comprend une découpe qui sépare un doigt élastique (14′), ce doigt élastique (14′) présentant une formation telle qu'il passe au moins légèrement à l'arrière du profilé longitudinal (11′; 11˝) qui est à l'opposé de l'axe de pivotement (S4) du loquet de blocage (14).

11. Diable selon la revendication 9 ou 10, caractérisé en ce qu'une entretoise (16) reliant les profilés longitudinaux (11˝) tournés l'un vers l'autre du cadre vertical supérieur (10˝) est disposée à une certaine distance de la liaison articulée des profilés longitudinaux inférieur et supérieur (11′, 11˝), mais cependant à l'intérieur de la région qui est recouverte par le loquet de blocage (14), entretoise dont les extrémités tournées vers l'extérieur sont munies de bouchons élastiques qui coopèrent par serrage avec les deux autres profilés longitudinaux (11′) à l'état plié ou à l'état déplié.

12. Diable selon la revendication 9 ou 10, caractérisé en ce que l'extrémité de préférence du profilé longitudinal inférieur (11′) comprend un bouchon élastique (14˝) avec un bourrelet en saillie, dont le diamètre est légèrement inférieur à la largeur interne du profilé en U du loquet de blocage (14), le bourrelet en saillie coopérant par serrage avec le loquet de blocage (14).

13. Diable selon l'une quelconque des revendications 1 à 12, caractérisé en ce que les deux profilés longitudinaux inférieurs (11′) de la partie de cadre inférieure (10′) sont reliés par une traverse (39) comprenant des rainures et/ou des alésages.

14. Diable selon la revendication 13, caractérisé en ce qu'un organe de traction (40′) constitué de préférence par une sangle en caoutchouc est prévu entre la traverse (39) et la partie arrière (33) de la palette.

15. Diable selon la revendication 13 ou 14, caractérisé en ce qu'il est prévu entre la traverse (39) et l'entretoise (16) un dispositif de retenue de charge (40˝) constitué de préférence par un câble en caoutchouc.

16. Diable selon l'une quelconque des revendications 1 à 15, caractérisé en ce que le cadre vertical (10) et le train de roues (20) avec le moyen de support de charge (30) sont reliés l'un à l'autre de façon amovible, de préférence par une liaison à enfichage, l'entretoise (27) situé du côté du train de roues comprenant de chaque côté des logements d'enfichage (25) pour les extrémités d'enfichage (17) du cadre vertical (10) et des extrémités coudées (27˝) pour la réception des douilles de pivotement (24) des supports de roue aux extrémités inférieures du cadre vertical, les axes des logements d'enfichage et des éléments de profilé étant sensiblement parallèles et situés dans le plan du cadre vertical.

17. Diable selon la revendication 15, caractérisé en ce que les extrémités d'enfichage (17) des profilés longitudinaux (11) comprennent une saillie d'arrêt (18˝) tournée vers l'extérieur et disposée à leur extrémité, les extrémités d'enfichage (17) étant munies d'une butée (18′) limitant la profondeur d'enfoncement et la distance séparant les logements d'enfichage (25) étant de préférence légèrement inférieure à la distance séparant les extrémités d'enfichage (17) des profilés longitudinaux (11) du cadre vertical (10) quand il n'est pas sous contrainte.

18. Diable selon la revendication 16 ou 17, caractérisé en ce que chaque logement d'enfichage (25) comprend un élément oblique de serrage (26) faisant diminuer la largeur mesurée transversalement au plan du cadre vertical dans la direction de l'écartement du cadre vertical (10).
